Europäisches Patentamt

European Patent Office

Office européen des brevets

(11) Publication number: **0 103 348**
**B1**

## EUROPEAN PATENT SPECIFICATION

(45) Date of publication of patent specification: **20.04.88**

(51) Int. Cl.⁴: **B 23 K 31/06, C 21 D 9/50,**
**B 23 K 9/02, B 23 K 37/06**

(21) Application number: **83302810.3**

(22) Date of filing: **17.05.83**

(54) **UO steel pipe welding method.**

(30) Priority: **21.05.82 JP 86110/82**

(43) Date of publication of application:
**21.03.84 Bulletin 84/12**

(45) Publication of the grant of the patent:
**20.04.88 Bulletin 88/16**

(84) Designated Contracting States:
**DE FR GB IT**

(56) References cited:
**DE-B-1 020 045**
**DE-B-2 252 878**
**DE-C-1 049 408**
**GB-A-1 496 377**
**US-A-4 061 262**

**Patent Abstracts of Japan, Vol. 4, No. 179, 11
December 1980
Patent Abstracts of Japan, Vol. 5, No. 147, 17
September 1981**

(73) Proprietor: **KAWASAKI STEEL CORPORATION**
**1-28, Kitahonmachi-Dori 1-Chome**
**Chuo-ku Kobe-Shi Hyogo 650 (JP)**

(72) Inventor: **Matsuyama, Junya**
**341-14, Dainichi**
**Yotsukaido City (JP)**
Inventor: **Kamada, AKio**
**21-16, Chishirodai-Higashi 2-Chome**
**Chiba City (JP)**
Inventor: **Kawabata, Fumimaru**
**C-404, 1351, Sonnou-Cho**
**Chiba City (JP)**
Inventor: **Uegaki, Tatsufumi**
**9-203, 1351, Sonnou-Cho**
**Chiba City (JP)**
Inventor: **Miyake, Shigeru**
**1299-2, Ohji**
**Chiba City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

## Description

This invention relates to a UO (or UOE) steel pipe welding method, and more particularly to a welding method capable of preventing cracks (pipe end cracks) in bead ends at the ends of large diameter straight seam welded steel pipes during the inner surface welding process.

UO (or UOE) steel pipe acquires its name from the initial letters of the main processes involved in its manufacture, that is, U-pressing (i.e. forming the material into a U-shape cross-section), O-pressing (i.e. forming the material into an O-shape) and Expanding. The inner seam welding of the UO steel pipe is generally effected by submerged arc welding (SAW) or inert gas shielded metal arc welding (MIGW). In this case, welding electrodes are supported by a boom which is guided by a preceding tracing roll moving along a groove formed in the inside of the steel pipe.

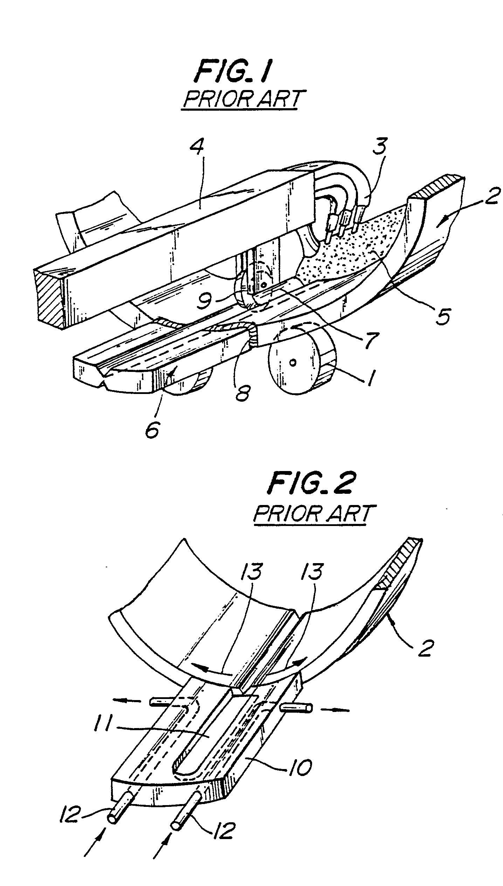

Fig. 1 of the accompanying drawings exemplarily illustrates the carrying out of the inner seam welding of a steel pipe. The steel pipe 2 is so arranged on turning rolls 1 that the seam of the steel pipe 2 assumes the lowermost position. A boom 4 carrying welding electrodes 3 is inserted from one end of the pipe so that the electrodes 3 are adjacent the other end of the pipe. The boom is then withdrawn from the pipe at a constant speed and the required seam welding is carried out. In the case of SAW, a device (not shown) for supplying flux 5 shown in Fig. 1 is arranged on the boom 4, while a device (not shown) for supplying a shield gas is arranged on the boom 4 for MIGW.

In such seam welding, there is a tendency for the weld bead at commencement and termination of the welding to be defective in configuration and quality. In order to improve the quality and yield rate of UO steel pipes, therefore, tab plates 6 are, in general, previously welded to both ends of the steel pipe at the seam and welding is started from one point on one tab plate and terminated at a point on the other tab plate.

The tab plate 6 is a steel plate of substantially the same material and thickness as the steel pipe 2 and has a groove of substantially the same cross-section as the groove 7 of the steel pipe 2. In this way the quality and configuration of the welded bead at the ends of the steel pipe is improved. In this case, the tab plates 6 are fixed to the steel pipe 2 by weld beads 8 by $CO_2$ gas welding or manual welding.

When welding steel pipes, because of the long weld line, it is necessary to provide a guide means for exactly moving a heat source for welding along the groove 7 to be welded. An optical or electromagnetic guide means which moves in advance of the heat source without touching the steel pipe may be used. When welding the insides of steel pipes, however, a tracing roller 9 directly in contact with the groove 7 to trace the weld line in advance of the heat source is usually used for this purpose because of the limitations of space and the accuracy of tracing. The tracing roller 9 is directly secured to the boom 4 in a manner such that all the load at one end of the boom 4, which may be more than 1 ton, is transmitted to the steel pipe.

However, the tab plates 6 are inherently not parts of a complete steel pipe and involve the cost of additional material and the extra cost involved in mounting them on and dismounting them from the steel pipe. In order to obtain higher productivity, therefore, it would be very desirable to carry out the welding without using such tab plates. Accordingly, a welding method has been eagerly expected for many years which does not involve using tab plates but which is capable of maintaining high quality and the configuration of the weld at the ends of the steel pipe.

In view of this, the inventors of this application have proposed a welding method without the use of tab plates 6 and processes in connection therewith to improve the productivity. These are disclosed in for example Japanese Laid-open Patent Application No. 57-81,990 (Japanese Patent Application No. 156,683/80).

Fig. 2 of the accompanying drawings exemplarily illustrates the method of Japanese Laid-open Patent Application No. 57-81,990 (referred to as the "prior art metal plate system", hereinafter). Namely, instead of using tab plates welded to a steel pipe, highly thermally conductive metal plates 10, made of for example copper, are urged against both ends of the steel pipe at the proximity of the seam. Welding starts on one of the metal plates 10 and terminates on the other metal plate 10. If required, each metal plate 10 is formed with a groove 11 to put the bead shapes in order. When the welding heat input is high, minimum required set plates are engaged in the grooves 11 of the metal plates 10 before welding. Moreover, it is preferable for the highly thermally conductive metal plate 10 to have a sufficient heat capacity in itself or to be positively cooled by water or the like flowing through cooling tubes 12 provided in the metal plate.

The metal plates 10 are required to have a cooling faculty for the following reasons.

If the cooling faculty of the metal plates 10 is insufficient, the beads on the plates 10 or the set plates themselves are angularly deformed in longitudinal section or otherwise deformed up out of their normal shapes in a manner such that the further the distance from the end of the steel pipe, the larger is the upward deformation. Such an angular deformation of the beads or set plates makes it impossible to keep the proper quality and configuration of the beads at the ends of the steel pipe. A sufficient cooling faculty of the metal plates prevent the angular deformation of the beads. This is a first reason.

Thermal stresses, due to the accumulated welding heat not being sufficiently dissipated at the proximity of the end of the steel pipe, occur in the directions shown by the arrows 13 in Fig. 2 and tend to tear the weld bead. These tearing forces pull that part of the bead which has not sufficiently solidified and cause pipe end cracks i.e. so-called "hot-cracking". Accordingly, it is necessary to eliminate the thermal stresses causing these tearing forces due to the welding heat or to restrain the bead parts likely to be torn so as to suppress the tearing forces. The cooling faculty of the metal plate can mainly eliminate the thermal stresses due to the welding heat. This is a second reason.

Referring back to the tab plate 6 and the weld bead 8 shown in Fig. 1 from the viewpoint of preventing the deformation of the set plates and to eliminate the tearing force, the tab plate 6 should have a sufficient width in the lateral direction or in a direction perpendicular to the weld line and the weld bead 8 should have a sufficient depth of penetration along a sufficient bead length, thereby simultaneously preventing the welding heat from accumulating at the end of the steel pipe. In order to fulfil these requirements, the material, working and mounting costs of the tab plates 6 are greatly increased disadvantageously and this unavoidably lowers the productivity of the welding process. In view of this, a solution for the above problems has been eagerly expected.

In such circumstances, the "prior art metal plate system" was expected to remarkably increase the productivity of the welding process. With this metal plate system, although the angular deformation can be prevented, pipe end cracks frequently occur when beads are much susceptible to hot cracking, so that this system does not sufficiently solve the problem of pipe end cracks. Accordingly, the inventors investigated the main factors causing pipe end cracks in the prior art metal plate system (Fig. 2) and found the following two factors.

(i) The pipe end cracks are caused by not only the bead tearing forces but also by lateral angular deformations of the steel pipe or by changes in deformation occurring at each side of the bead in lateral directions perpendicular to the weld line due to the load of the tracing roller. This is particularly acute in the case of the metal plate system without tab plates 6.

(ii) Even if the metal plate 10 itself has an adequate cooling faculty, the cooling effect only serves to cool the area of the steel pipe in contact with the metal plate 10 so pipe end cracks due to the tearing force cannot be sufficiently prevented because of the susceptibility of the bead to hot cracking.

The above factors (i) and (ii) will be explained hereinafter in more detail.

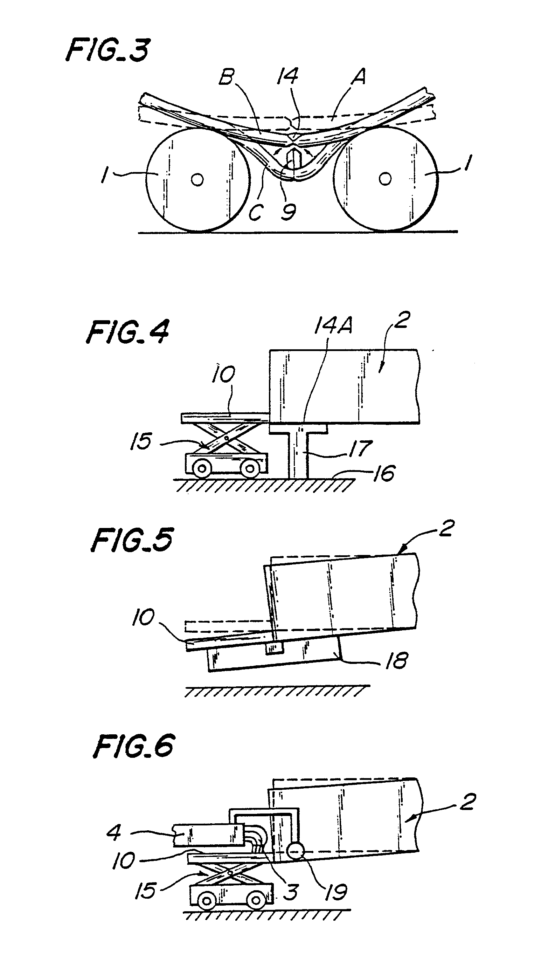

First the lateral angular deformation of the factor (i) due to the load of the (preceding) tracing roller 9 will be explained by referring to Fig. 3 of the accompanying drawings. In Fig. 3, letter A illustrates a part of a steel pipe 2 arranged on turning rollers 1 and B shows the part after it has been laterally angularly deformed by weld bead 14. Letter C illustrates the part after it has been further deformed by the load of the boom transmitted to it by the tracing roller 9. In the condition B, the lateral angular deformation is caused by welding and contraction of the weld bead so as to depress the part of the steel pipe between the turning rollers 1. However, as the steel pipe is restrained by the turning rollers 1, the amount of the lateral angular deformation is relatively small in comparison with the case without turning rollers and the weld bead is subjected to bending moments, correspondingly caused by the restrained lateral angular deformation, in directions which cause tearing of the weld bead during the processes of welding and contraction of the weld bead. In the condition C, on the other hand, the load of the boom is transmitted through the tracing roller 9 to the steel pipe 2 and deforms the part of the steel pipe to an extent substantially equal to that in the case without turning rollers 1, such that the weld bead 14 is not subjected to bending moments during the processes of welding and contracting of the weld bead. In the prior art using the tab plates 6 welded to the steel pipe, hot cracking does not occur because the above condition C is maintained even when the tracing roller 9 rides on the tab plate 6.

However, in the process without using tab plates as shown in Fig. 2, at the moment when the tracing roller 9 rides on the metal plate 10, the condition returns immediately from C to B because there is no rigid connection between the metal plate 10 and the steel pipe 2, so that the bead 14 is subjected to a considerably larger bending moment than in the case of the variation from condition A to condition B. As a result, pipe end cracks occur. In this manner, the pipe end cracks are caused by a factor other than the tearing force resulting from the thermal stresses (deformations) due to the welding heat.

Now, the aforementioned factor (ii) will be explained in detail. This is the case where the removal of the heat at the end of the steel pipe is insufficient for reducing the tearing force although the cooling faculty of the metal plate 10 itself is sufficient in the system without using the tab plates as shown in Fig. 2.

Even if the cooling faculty of the metal plate itself is sufficient, the cooling effect serves to cool only the area of the steel pipe in contact with the metal plate and this removal of heat is insufficient in the case of a bead which is highly susceptible to cracking. In the metal plate system, therefore, in addition to the removal of heat by the metal plate, the tearing force should be reduced or restrained.

Moreover, as a result of a detailed investigation of the tearing force and bending moment, it has been found that in order to prevent pipe end cracks completely, the bending moments should be reduced in addition to decreasing or restraining the tearing force.

It is an object of the present invention to provide an improved UO steel pipe welding method which eliminates the disadvantages of the prior art and is capable of preventing pipe end cracks with high productivity during the welding process.

It is a further object of the present invention to provide an improved steel pipe welding method to prevent pipe end cracks by avoiding bending moments acting upon the weld beam at one end of the pipe and by reducing the tearing forces acting upon the weld bead by tack welding a seam on the opposite side of the inner groove of the pipe, or by heating or cooling both sides of the weld bead.

According to the present invention there is provided a UO steel pipe welding method which comprises supporting the pipe on rolls and welding the inner seam of the pipe by means of welding electrodes held by a boom which is supported by a preceding tracing roller moving along an inner groove of the pipe whilst urging, against at least one end of the pipe adjacent said groove, at least one metal plate having a cooling faculty sufficient to reduce angular deformation of the bead and to reduce tearing forces acting on the bead characterised in that provision is made for preventing the load of said boom causing lateral angular deformations or changes in deformation at the end of the pipe on both sides of the weld bead when said preceding tracing roller leaves said end of the pipe and moves onto said metal plate, said provision involving supporting the outside of said pipe adjacent the weld line at least at said end and supporting said metal plate by a metal plate support means adjustable in height or restraining relative movement between said metal plate and said end of the pipe by a connecting means or supporting said metal plate by metal plate support means adjustable in height and including, in addition to said preceding tracing roller, a rear tracing roller to transmit the load of said boom to said end of the pipe after said preceding tracing roller leaves said end of the pipe.

In accordance with one embodiment of the invention tearing forces are reduced by tack welding the outer seam of the pipe at least at said end and thereby pipe cracks are prevented.

In accordance with another embodiment of the invention, instead of carrying out tack welding, portions of both sides of at least a distal end of the weld bead at said end of the steel pipe are heated to cause expansion displacements of the heated portions towards the center of the weld bead so as to reduce tearing forces acting upon the weld bead and thereby preventing pipe end cracks.

In accordance with a further embodiment of the invention, instead of carrying out tack welding, high temperature portions of said end of the steel pipe are cooled after the heat source for the seam welding has passed so as to reduce tearing forces acting upon the weld bead and thereby preventing pipe end cracks.

For a better understanding of the invention and to show how the same may be carried into effect, reference will now be made, be way of example, to the accompanying drawings, in which:—

Fig. 1 is a partial perspective view of a UO steel pipe being welded in accordance with the prior art using tab plates;

Fig. 2 is a partial perspective view of a UO steel pipe illustrating the prior art metal plate system of welding;

Fig. 3 is an end view of an end of a UO steel pipe illustrating various conditions of lateral angular deformation;

Fig. 4 is a side view of a UO steel pipe illustrating one embodiment of the invention wherein the steel pipe end and the metal plate are supported;

Fig. 5 is a side view of a UO steel pipe illustrating an embodiment of the invention wherein the steel pipe end and the metal plate are connected together;

Fig. 6 is a side view of a UO steel pipe illustrating a further embodiment of the invention wherein the metal plate is supported;

Fig. 7 is a partial perspective view of a steel pipe end illustrating a mechanical tearing force restraining method;

Fig. 8 is a partial perspective view of a steel pipe end showing another mechanical tearing force restraining method;

Fig. 9 is a partial perspective view of a steel pipe end illustrating a further tearing force restraining method;

Fig. 10 is a partial perspective view of a steel pipe end illustrating a still further tearing force reducing method;

Fig. 11 is a schematic partial plan view of a steel pipe end showing yet another tearing force reducing method; and

Fig. 12 is a partial perspective view of a steel pipe end illustrating still another tearing force reducing method.

Figs. 4—6 illustrate embodiments of the method of the present invention for preventing pipe end cracks due to bending moments by urging a metal plate 10 against the end of the steel pipe adjacent the groove and by preventing lateral angular deformations or changes in deformations on both sides of the weld bead at the end of the steel pipe which would ordinarily be caused by the load of the boom when the preceding roller leaves the pipe end and moves onto the metal plate.

In the embodiment in Fig. 4, the outside of the end of the steel pipe at the weld line is supported by a support surface 14A and the metal plate 10 is supported by a metal plate support means 15 to prevent lateral angular deformations or deformation changes on both sides of the weld bead at the end of the steel pipe. That is, referring to the bending moments acting upon the bead 14 in Fig. 3, the end of the steel pipe is supported to prevent it from being brought into the condition C as shown in Fig. 3 so as to keep the lateral angular deformation as if the preceding tracing roller were at the steel pipe end although in fact it has ridden on to the metal plate 10 supported by means 15. This is because the bending moment caused during the welding and contraction of the weld bead in the condition B is so small that the hot cracking does not occur. In this case, the support surface 14A is formed on a support 17 on a base 16 to support the steel pipe 2 at the back of the weld line, so that even if the load of the boom is transmitted to the steel pipe, the condition A or the laterally angularly deformed condition B is maintained.

As a result, when the tracing roller rides on the metal plate 10, the transition from the condition C to B in Fig. 3 is prevented, thereby avoiding the pipe end cracks occurring during this transition process due to the bending moment. In this case, a support surface 14A of length approximately 100 mm along the weld line direction is sufficient for this purpose. A length of more than 100 mm is even more preferable.

Fig. 5 illustrates another embodiment wherein a connection means 18 restrains relative movement between the pipe end and the metal plate 10 to prevent the lateral angular deformation on both sides of the weld beam at the pipe end from changing. The connection means 18 may be for example a powerful magnet or a mechanical clamp which is able to connect the steel pipe and the metal plate rigidly against forces. According to this embodiment even when the tracing roller rides on to the metal plate 10, the lateral angular deformation is kept to condition C (shown in Fig. 3) just as if the tracing roller were at the pipe end thereby preventing pipe end cracks due to the bending moment.

Fig. 6 illustrates a further embodiment wherein the metal plate 10 is supported by the metal support means 15 and a rear tracing roller 19, in addition to the preceding tracing roller 9, is used to transmit all or part of the boom load to the pipe end even after the preceding roller has ridden on to the metal plate 10 or has been raised thereby preventing the lateral angular deformation on both sides of the weld bead at the pipe end from changing.

In other words, because of the additional tracing roller 19 following the heat source for the welding (in addition to the tracing roller 9 preceding the heat source) even after the preceding tracing roller 9 has left the pipe end, the rear tracing roller 19 transmits the load of the boom to the steel pipe to keep the lateral angular deformation in the condition C (as shown in Fig. 3) thereby preventing pipe end cracks due to the bending moment.

In this case it is preferable to raise the preceding tracing roller 9 at the moment when the rear tracing roller is brought into contact with the steel pipe, thereby making constant the load of the boom transmitted to the steel pipe 2. When the height of the metal plate 10 is determined before welding, it is preferable to take into account the depression of the steel pipe at its end owing to the load of the beam.

Referring back to the issue of restraining or decreasing the tearing force in order to prevent pipe end cracks caused by the tearing force resulting from thermal stresses and deformation due to the welding heat, it is necessary to reduce or restrain the tearing force due to the welding heat since the complete dissipation of the welding heat at the pipe end by the metal plate 10 cannot be expected.

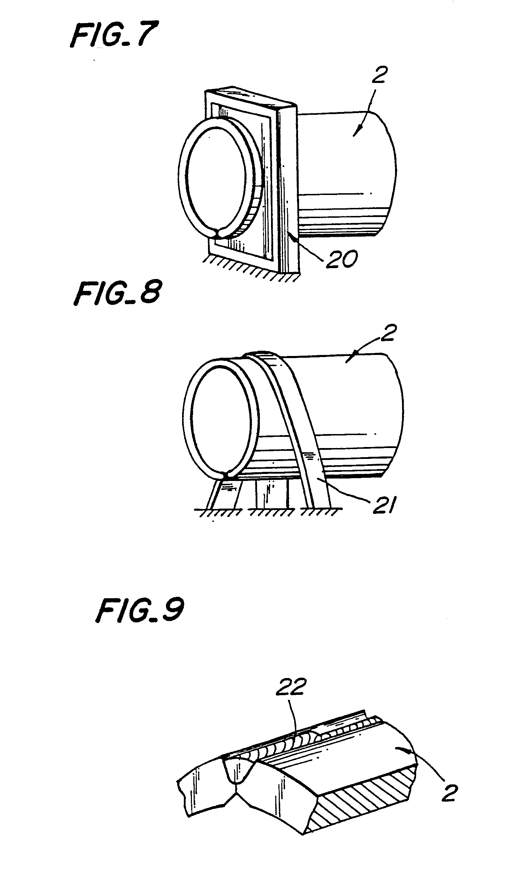

As shown in Fig. 7, the end of the steel pipe may be inserted into a metal clamper 20 having an inner diameter commensurate with the outer diameter of the steel pipe 2 to restrain the tearing force. Furthermore, the steel pipe 2 may be clamped by steel wires or steel bands 21 as shown in Fig. 8. These methods shown in Figs. 7 and 8 can substantially completely restrain the deformations of the weld bead and prevent pipe end cracks, even if the tearing forces caused by the welding thermal stresses act on the weld bead. These methods, however, require time-consuming labor and are not acceptable for the present invention whose object is to improve productivity by deleting the tab plates.

Referring to Fig. 9, this illustrates an embodiment of a tearing force restraining method which is acceptable according to the present invention. Before welding the groove on the inside of a steel pipe (i.e. the inner seam), tack welding is effected on the outside of the pipe on the opposite side of the groove (i.e. the outer seam) to form a track bead 22 at least at the end of the steel pipe. As shown in Fig. 9, it is effective, for restraining the tearing force, to make thicker the track bead only at a pipe end in the case where the tack welding is effected along the entire length of the pipe or only at the pipe end. A length of 30 mm or more of tack bead 22 is sufficient.

In order to compare the invention using any one or more of the bending moment preventing methods shown in Figs. 4—6 and the tearing force restraining method shown in Fig. 9 with the prior art using the metal plates as shown in Fig. 2, comparative tests were carried out. In the tests, steel pipes having diameters of 300—2,000 mm and thicknesses of 5—40 mm were welded with welding heat inputs of 15—130 KJ/cm. When cracks occurred in the pipe ends, even in part, they were judged as defective cracks.

In accordance with this judgement, no cracks occurred in the pipes welded according to the invention, but cracks occurred in most of the pipes welded by the prior art using the metal plates. The use of one of the bending moment preventing methods shown in Figs. 4—6 only or the tearing force restraining method shown in Fig. 9 only can reduce the cracks in comparison with prior art welding method using metal plates, but cannot completely prevent the cracks. By simultaneously carrying out bending moment prevention and tearing force restraint no cracks in the pipe ends occurred even with pipes of different sizes under any conditions of welding heat input. Accordingly, it has been ascertained that the present invention is very effective in preventing pipe end cracks with high productivity.

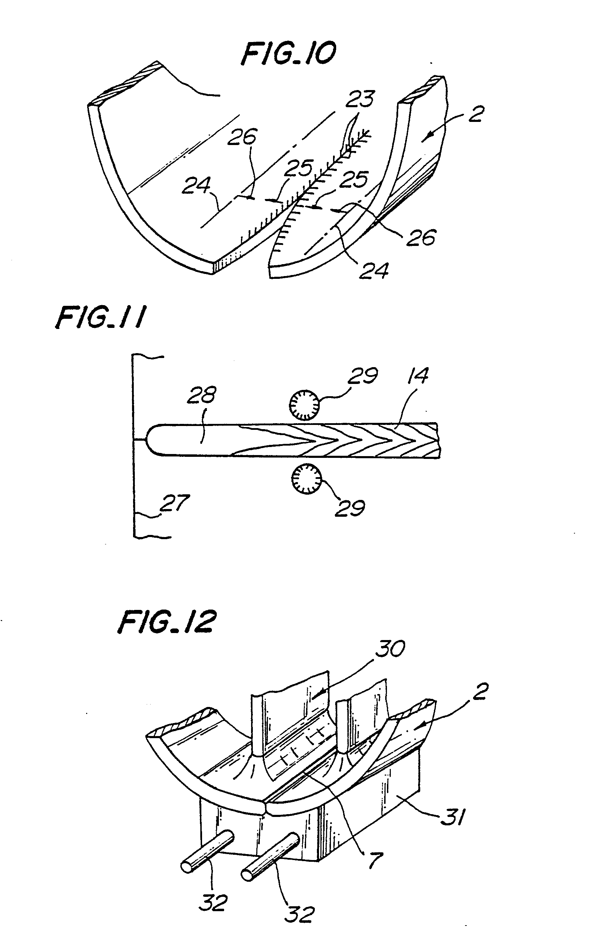

Referring to Figs. 10 and 11 illustrating embodiments of tearing force reducing methods, the portions on both sides of at least the distal end of the weld bead are heated during the seam welding of the inner groove of the pipe to cause thermal expansion displacement of the heated portions towards the center of the weld bead.

The inherent factor involved in the tearing force arising from the welding thermal stresses is a bimetal action in that, when the regions of the groove indicated by the short oblique lines 23 in Fig. 10 are heated by the welding heat, the areas of the regions 23 expand and then contract upon being cooled and the seam opens. The degree of opening is greater nearer to the pipe end. Therefore, portions 24 spaced from, and on both sides of the weld bead of the pipe end are linearly heated, by the movement of the heat source for welding, to obtain expansion deformation in the direction of arrows 26 against the deformation in the direction of the arrows 25 caused by the bimetal action. As a consequence the opening of the bead is prevented and pipe end cracks are avoided as shown in Fig. 10.

Referring to Fig. 11, when the bead 14 approaches the pipe end 27, tearing forces act on the rearmost end (the finally solidifying position) of the crater 28 and pipe end cracks are formed. In view of this, with the embodiment shown in Fig. 11, the portions near the rearmost end of the crater are heated to cause expansion displacement towards the center of the bead, thereby reducing the tearing forces and preventing opening (pipe end cracks). Different from the method shown in Fig. 10, the portions 29 as near as possible to, and on both sides of, the rearmost end of the crater 28 are heated to cause local expansions about the heated portions 29 so as to contract inwardly the zone between the heated portions 29, thereby reducing the tearing forces to prevent opening (pipe end cracks).

With the method shown in Fig. 11, therefore, it is essential to heat the portions adjacent to, and on both sides of, the rearmost end of the crater formed behind the heat source for the welding. The nearer the heated portions are to the rearmost end, the more effective is the prevention of pipe end cracks. The heated portions may be moved, with the same movement of the heat source for welding, in the same manner as in Fig. 10, so long as it is possible to maintain a relative position between the heat source and the heated portions.

Any single one or combination of the methods shown in Figs. 10 and 11 may be used for this purpose. The heating may be applied to the welding side or to the inner surface and the opposite side or to the outer surface of the steel pipe or to any one of the surfaces. It is of course preferable to apply heat to both surfaces of the steel pipe.

In order to compare the invention using any one or more of the bending moment preventing methods shown in Fig. 4—6 and any one or both of the tearing force reducing methods shown in Figs. 10 and 11 with the prior art using the metal plates as shown in Fig. 2, comparative tests were carried out under the same conditions and using the same standards as those of the tests as above described. In the tests, no cracks occurred in the pipes welded according to the invention, while cracks occurred in most of the pipes welded by the prior art using the metal plates. The use only of the tearing force reducing method shown in Figs. 10 and 11 can reduce pipe end cracks in comparison with the prior art welding method using the metal plates, but cannot completely prevent the cracks.

By simultaneously carrying out bending moment prevention and tearing force reduction, no cracks in the pipe ends occurred even with pipes of different sizes under any conditions of welding heat inputs. Accordingly, it has been ascertained that the present invention is very effective in preventing pipe end cracks to ensure high productivity.

Fig. 12 illustrates a further embodiment of a tearing force reducing method according to the invention. In this embodiment, high temperature portions of the pipe end are cooled after the heat source for the inner surface seam welding has passed. As the welding heat is unsteady at the pipe end in the inner seam welding of a UO steel pipe, the temperature at the inner pipe end is likely to rise to a higher temperature than the inside remote from the pipe end so as to increase the bimetal action arising as a result of the welding thermal stresses. The bimetal action then increases the tearing forces at the pipe end and causes the cracks. Accordingly, it is effective for reducing the tearing force to cool the portions of the groove in the pipe end. Fig. 12 illustrates the embodied method for this purpose.

Referring to Fig. 12, there is provided a gas cooling device 30 for jetting a cooling gas against the region of the groove 7 in an end of the steel pipe 2 to cool the high temperature portions thereof after the heat source for the welding has passed. The cooling gas may be air, mist, nitrogen, argon, $CO_2$ or other various kinds of gases.

It is effective to cool a region, for example, within 300 mm of both sides of the groove 7 and within 200 mm from the pipe end. It is however more effective to cool a broader area than the above area to assure the decrease of the tearing force.

Reference numeral 31 in Fig. 12 denotes a box-shaped cooling device utilizing a cooling means other than the gas jetting. The device is filled with a refrigerant such as dry ice or is provided with a conduit 32 for circulating a cooling liquid such as water. Such a cooling device 31 can effectively cool the high temperature portions of the pipe end after the heat source for welding has passed. The above refrigerants such as dry ice or cooling water may be in contact with the steel pipe directly or indirectly through an outer wall of the cooling device 31. In this case, the cooled area can be somewhat narrowed in comparison with the gas jetting of the cooling device 30 but cooling a broader area is preferable as in the cooling device 30.

The above cooling methods using the devices 30 and 31 may be applied to either of the inner and outer surfaces of the steel pipe 2. The simultaneous application of such methods on both these surfaces as shown in Fig. 12 ensures a more effective decrease in the tearing force.

In the event that tack welding is effected on the outer seam of the pipe prior to welding of the inner seam, the tearing force reducing method shown in Fig. 12 can suppress the temperature rise of the tack weld bead to provide an outer restraint on the tearing force which is an additional effect.

For the purpose of comparing the invention using any one or more of the bending moment preventing methods shown in Figs. 4—6 and the tearing force reducing method shown in Fig. 12 with the prior art using the metal plates as shown in Fig. 2, comparative tests were carried out under the same conditions and using the same standards as those in the tests as above described. In the judgement of these tests, no cracks occurred in the pipes welded according to the invention, while cracks occurred in most of the pipes welded by the prior art using the metal plates. The use of the tearing force reducing method shown in Fig. 12 only can reduce the pipe end cracks in comparison with the prior art welding method, but cannot completely prevent the cracks.

By simultaneously carrying out bending moment prevention and tearing force reduction, no cracks in the pipe ends occurred even with pipes of different sizes under any conditions of welding heat input. Accordingly, it has been ascertained that the present invention is very effective in preventing pipe end cracks to ensure high productivity.

As can be seen from the above description, the UO steel pipe welding method according to the invention can effectively prevent pipe end cracks and maintain high productivity in inner seam welding process.

While the invention has been particularly shown and described with reference to preferred embodiments thereof, it will be understood by those skilled in the art that the foregoing and other changes in form and details can be made without departing from the scope of the invention as defined in the following claims.

**Claims**

1. A UO steel pipe welding method which comprises supporting the pipe (2) on rolls (1) and welding the inner seam of the pipe by means of welding electrodes (3) held by a boom (4) which is supported by a preceding tracing roller (9) moving along an inner groove (7) of the pipe whilst urging, against at least one end of the pipe adjacent said groove, at least one metal plate (10) having a cooling faculty sufficient to reduce angular deformation of the bead and to reduce tearing forces acting on the bead, characterised in that provision is made for preventing the load of said boom (4) causing lateral angular deformations or changes in deformation at the end of the pipe on both sides of the weld bead when said preceding tracing roller (9) leaves said end of the pipe and moves onto said metal plate, said provision involving supporting means (17) for supporting the outside of said pipe adjacent the weld line at least at said end and metal plate support means (15) which is adjustable in height for supporting said metal plate (10).

2. A UO steel pipe welding method which comprises supporting the pipe (2) on rolls (1) and welding the inner seam of the pipe by means of welding electrodes (3) held by a boom (4) which is supported by a preceding tracing roller (9) moving along an inner groove of the pipe whilst urging, against at least one end of the pipe adjacent said groove, at least one metal plate (10) having a cooling faculty sufficient to reduce angular deformation of the bead and to reduce tearing forces acting on the bead characterised in that provision is made for preventing the load of said boom (4) causing lateral angular deformations or changes in deformation at the end of the pipe on both sides of the weld bead when said preceding tracing roller (9) leaves said end of the pipe and moves onto said metal plate, said provision involving restraining relative movement between said metal plate and said end of the pipe by a connecting means (18).

3. A UO steel pipe welding method which comprises supporting the pipe (2) on rolls (1) and welding the inner seam of the pipe (2) by means of welding electrodes (3) held by a boom (4) which is supported by a preceding tracing roller (9) moving along an inner groove of the pipe whilst urging, against at least one end of the pipe adjacent said groove, at least one metal plate (10) having a cooling faculty sufficient to reduce angular deformation of the bead and to reduce tearing forces acting on the bead characterised in that provision is made for preventing the load of said boom (4) causing lateral angular deformations or changes in deformation at the end of the pipe on both sides of the weld bead when said preceding tracing roller leaves said end of the pipe (2) and moves onto said metal plate (10), said provision involving supporting said metal plate (10) by metal plate support means (15) adjustable in height and including, in addition to said preceding tracing roller, a rear tracing roller (19) to transmit the load of said boom to said end of the pipe after said preceding tracing roller (9) leaves said end of the pipe.

4. A method according to any one of claims 1 to 3 wherein portions of said pipe on both sides of at least a distal end of the weld bead at said end of the pipe are heated to cause expansion displacements of the heated portions towards the center of said weld bead.

5. A method according to claim 4, wherein said portions are spaced from, and on both sides of, the weld bead at said end and are linearly heated by movement of a heat source for welding.

6. A method according to claim 4, wherein said portions are portions (29) as near as possible to, and on both sides of, the rearmost end of the crater (28) formed during welding.

7. A method according to any one of claims 1 to 3 wherein the high temperature portions of the pipe at said end of the pipe are cooled after a heat source for the seam welding has passed therethrough.

8. A method according to claim 7, wherein said high temperature portions are cooled by a gas-cooling device (30) for jetting a cooling gas selected from air, mist, nitrogen, argon and $CO_2$.

9. A method according to claim 7 or 8, wherein said high temperature portions are cooled by a box-shaped cooling device filled with a refrigerant such as dry ice or provided with conduits for circulating cooling liquid.

10. A method according to any one of claims 1 to 3 wherein the outer seam of the pipe at least at said end is tack welded before UO welding is carried out.

## Patentansprüche

1. UO-Stahlrohr-Schweißverfahren, umfassend das Abstützung des Rohres (2) auf Rollen (1) und das Schweißen der Innennaht mit Hilfe von Schweißelektroden (3), die von einem Ausleger (4) gehalten werden, der über eine vordere Spurrolle (9) abgestützt wird, die sich entlang einer Innenrille (7) des Rohres bewegt, während gegen mindestens ein Rohrende, anliegend an der Rille, mindestens eine Metallplatte (10) andrückt, die eine Kühlungsfähigkeit aufweist, die zur Reduzierung einer Winkelverformung der Schweißraupe und zur Reduzierung von auf die Schweißraupe wirkenden Zugkräften ausreicht, dadurch gekennzeichnet, daß eine Vorkehrung zur Verhinderung der Belastung des Auslegers (4) getroffen wird, die seitliche Winkelverformungen oder Verformungsveränderungen am Ende des Rohres zu beiden Seiten der Schweißraupe verursacht, wenn die vordere Spurrolle (9) das Rohrende verläßt und sich auf der Metallplatte· bewegt, wobei die Vorkehrung eine Abstützvorrichtung (17), die das Rohr an mindestens einem Ende an der an die Schweißlinie angrenzenden Außenseite abstützt, und eine Metallplatten-Stützvorrichtung (15) aufweist, die zum Abstützen der Metallplatte (10) höhenverstellbar ist.

2. UO-Stahlrohr-Schweißverfahren, umfassend das Abstützung des Rohres (2) auf Rollen (1) und das Schweißen der Innennaht mit Hilfe von Schweißelektroden (3), die von einem Ausleger (4) gehalten werden, der über eine vordere Spurrolle (9) abgestützt wird, die sich entlang einer Innenrille (7) des Rohres bewegt, während gegen mindestens ein Rohrende, anliegend an der Rille, mindestens eine Metallplatte (10) andrückt, die eine Kühlungsfähigkeit aufweist, die zur Reduzierung einer Winkelverformung der Schweißraupe und zur Reduzierung von auf Schweißraupe wirkenden Zugkräften ausreicht, dadurch gekennzeichnet, daß eine Vorkehrung zur Verhinderung der Belastung des Auslegers (4) getroffen wird, die seitliche Winkelverformungen oder Verformungsveränderungen am Ende des Rohres zu beiden Seiten der Schweißraupe verursacht, wenn die vordere Spurrolle (9) das Rohrende verläßt und sich auf der Metallplatte bewegt, wobei die Vorkehrung die Unterdrückung einer Relativbewegung zwischen der Metallplatte und dem Rohrende durch eine Verbindungsvorrichtung (18) umfaßt.

3. UO-Stahlrohr-Schweißverfahren, umfassend das Abstützung des Rohres (2) auf Rollen (1) und das Schweißen der Innennaht mit Hilfe von Schweißelektroden (3), die von einem Ausleger (4) gehalten werden, der über eine vordere Spurrolle (9) abgestützt wird, die sich entlang einer Innenrille (7) des Rohres bewegt, während gegen mindestens ein Rohrende, anliegend an der Rille, mindestens eine Metallplatte (10) andrückt, die eine Kühlungsfähigkeit aufweist, die zur Reduzierung einer Winkelverformung der Schweißraupe und zur Reduzierung von auf die Schweißraupe wirkenden Zugkräften ausreicht, dadurch gekennzeichnet, daß eine Vorkehrung zur Verhinderung der Belastung des Auslegers (4) getroffen wird, die seitliche Winkelverformungen oder Verformungsveränderungen am Ende des Rohres zu beiden Seiten der Schweißraupe verursacht, wenn die vordere Spurrolle (9) das Rohrende verläßt und sich auf der Metallplatte bewegt, wobei die Vorkehrung das Abstützen der Metallplatte (10) durch eine höhenverstellbare Metallplatten-Abstützvorrichtung (15) und zusätzlich zur vorderen Spurrolle eine hintere Spurrolle (19) umfaßt, um die Last des Auslegers auf das Rohrende zu übertragen, nachdem die vordere Spurrolle (9) das Rohrende verlassen hat.

4. Verfahren nach einem der Ansprüche 1 bis 3, bei dem Bereiche des Rohres zu beiden Seiten mindestens eines distalen Endes der Schweißraupe am Rohrende erhitzt werden, um Ausdehnungsverschiebungen der erhitzten Bereiche in Richtung auf die Mitte der Schweißraupe zu erzeugen.

5. Verfahren nach Anspruch 4, bei dem die Bereiche mit Abstand zur und zu beiden Seiten von der Schweißraupe angeordnet sind und durch Bewegung einer Heizquelle zum Schweißen linear erhitzt werden.

6. Verfahren nach Anspruch 4, bei dem die Bereiche Bereiche (29) sind, die so nahe wie möglich am und zu beiden Seiten von dem hintersten Ende der während des Schweißens gebildeten Mulde (18) liegen.

7. Verfahren nach einem der Ansprüche 1 bis 3, bei dem am Rohrende die Hochtemperaturbereiche des Rohres abgekühlt werden, nachdem eine Heizquelle zum Schweißen der Naht die Hochtemperaturbereiche passiert hat.

8. Verfahren nach Anspruch 7, bei dem die Hochtemperaturbereiche von einer Gas-Kühlvorrichtung zum Ausstoßen eines aus Luft, Nebel, Stickstoff, Argon und $CO_2$ ausgewählten Kühlgases abgekühlt werden.

9. Verfahren nach Anspruch 7 oder 8, bei dem die Hochtemperaturbereiche durch eine kastenförmige Kühlvorrichtung gekühlt werden, die mit einem Kühlmittel wie Trockeneis gefüllt oder mit Leitungen zum Zirkulieren von Kühlflüssigkeit versehen ist.

10. Verfahren nach einem der Ansprüche 1 bis 3, bei dem die Außennaht des Rohres zumindest am Ende schweißgeheftet wird, bevor das UO-Schweißen ausgeführt wird.

## Revendications

1. Procédé de soudage d'un tube en acier UO, qui consiste à faire supporter le tube (2) par des galets (1) et à souder le cordon intérieur du tube au moyen d'électrodes de soudage (3) maintenues en place par une flèche (4) qui est supportée par un galet traceur avent (9) se déplaçant le long d'une rainure intérieure (7) du tube, tout en poussant, contre au moins une extrémité du tube située au voisinage immédiat de ladite rainure, au moins une plaque métallique (10) disposant d'un pouvoir de refroidissement suffisant pour réduire la déformation angulaire du cordon et pour réduire les forces de déchirement agissant sur le cordon, caractérisé en ce qu'il est prévu un moyen pour empêcher que la charge de ladite flèche (4) ne provoque une déformation angulaire latérale ou des variations de déformation à l'extrémité du tube, des deux côtés du cordon de soudure, quand ledit galet traceur avant (9) quitte ladite extrémité du tube et se déplace vers ladite plaque métallique, ledit moyen comportant un moyen de support (17) destiné à supporter le côté extérieur dudit tube contigu à la ligne de soudure au moins au niveau de ladite extrémité, et un moyen de support de plaque métallique (15), qui est réglable en hauteur et est destiné à supporter ladite plaque métallique (10).

2. Procédé de soudage d'un tube en acier UO, qui consiste à faire supporter le tube (2) par des galets (1) et à souder le cordon intérieur du tube au moyen d'électrodes de soudage (3) maintenues en place par une flèche (4) qui est supportée par un galet traceur avant (9) qui se déplace le long d'une rainure intérieure du tube tout en poussant, contre au moins une extrémité du tube contiguë à ladite rainure, au moins une plaque métallique (10) disposant d'un pouvoir de refroidissement suffisant pour réduire la déformation angulaire du cordon de soudure et pour réduire les forces de déchirement agissant sur le cordon de soudure, caractérisé en ce qu'il est créé un moyen pour empêcher que la charge de ladite flèche (4) ne provoque des déformations angulaires latérales ou des variations de déformation au niveau de l'extrémité du tube, sur les deux côtés du cordon de soudure, quand ledit galet traceur avant (9) quitte ladite extrémité du tube et se déplace sur la plaque métallique, ledit moyen consistant à restreindre le déplacement relatif entre ladite plaque métallique et ladite extrémité du tube, grâce à un moyen de liaison (18).

3. Procédé de soudage d'un tube en acier UO, qui consiste à faire supporter le tube (2) par des galets (1) et à souder le cordon intérieur du tube (2) au moyen d'électrodes de soudage (3) maintenues en place par une flèche (4) qui est supportée par un galet traceur avant (9), lequel se déplace le long d'une rainure intérieure du tube, tout en poussant, contre au moins une extrémité du tube contiguë à ladite rainure, au moins une plaque métallique (10) ayant un pouvoir de refroidissement suffisant pour réduire la déformation angulaire du cordon de soudure et pour réduire les forces de déchirement agissant sur le cordon, caractérisé en ce qu'il est créé un moyen pour empêcher que la charge de ladite flèche (4) ne provoque des déformations angulaires latérales ou des variations de déformation au niveau de l'extrémité du tube, sur les deux côtés du cordon de soudure quand ledit galet traceur avant quitte ladite extrémité du tube (2) et se déplace sur ladite plaque métallique (10), ledit moyen consistant à faire supporter ladite plaque métallique (10) par un moyen de support de plaque métallique (15), réglable en hauteur et comprenant, outre le galet traceur avant, un galet traceur arrière (19) destiné à transmettre la charge de ladite flèche à ladite extrémité du tube après que ledit galet traceur avant (9) quitte ladite extrémité du tube.

4. Procédé selon l'une quelconque des revendications 1 à 3, dans lequel des portions dudit tube, sur les deux côtés d'au moins une extrémité distale du cordon de soudure, au niveau de ladite extrémité du tube, sont chauffées de façon à provoquer un déplacement par dilatation des parties chauffées vers le centre dudit cordon de soudure.

5. Procédé selon la revendication 4, dans lequel lesdites portions se trouvent à une certaine distance, des deux côtés, du cordon de soudure au niveau de ladite extrémité, et reçoivent un chauffage linéaire provoqué par le déplacement d'une source de chauffage destinée au soudage.

6. Procédé selon la revendication 4, dans lequel lesdites portions sont des portions (29), situées aussi près que possible, des deux côtés de cette dernière, de l'extrémité arrière du cratère (26) formé pendant le soudage.

7. Procédé selon l'une quelconque des revendications 1 à 3, dans lequel les parties à haute température du tube au niveau de ladite extrémité du tube sont refroidies après qu'un source de chaleur destinée au soudage à la molette a passé entre elles.

8. Procédé selon la revendication 7, dans lequel lesdites portions à haute température sont refroidies par un dispositif à refroidissement par un gaz (30), par projection d'un gaz de refroidissement choisi entre l'air, le brouillard, l'azote, l'argon et le $CO_2$.

9. Procédé selon la revendication 7 ou 8, dans lequel lesdites portions à haute température sont refroidies par un dispositif de refroidissement du type caisson, rempli d'un réfrigérant, tel la neige carbonique, ou possédant des conduits destinés à faire circuler le liquide de refroidissement.

10. Procédé selon l'une quelconque des revendications 1 à 3, dans lequel le cordon extérieur du tube, au moins au niveau de ladite extrémité, est pointé avant mise en oeuvre du soudage UO.

## FIG. 1
### PRIOR ART

## FIG. 2
### PRIOR ART

FIG. 3

FIG. 4

FIG. 5

FIG. 6

2

**FIG.7**

**FIG.8**

**FIG.9**

## FIG.10

## FIG.11

## FIG.12